# EUROPEAN PATENT SPECIFICATION

(11) **EP 1 488 346 B1**
(45) Date of publication and mention of the grant of the patent: **17.01.2018**
(21) Application number: 03708238.5
(22) Date of filing: 14.03.2003
(51) Int. Cl.: G06F 17/30, H04N 5/00, G11B 27/28

(54) **METHOD AND APPARATUS FOR USING METADATA FROM DIFFERENT SOURCES**
VERFAHREN UND GERÄT ZUR ANWENDUNG VON METADATEN VERSCHIEDENER QUELLEN
PROCEDE ET APPAREIL D'UTILISATION DE METADONNEES A PARTIR DE DIFFERENTES SOURCES

(30) Priority: 26.03.2002 EP 02006866
(43) Date of publication of application: 22.12.2004
(73) Proprietor: Thomson Licensing, 92130 Issy-les-Moulineaux (FR)
(72) Inventor: SCHILLER, Harald, 30539 Hannover (DE); ADOLPH, Dirk, 30952 Ronnenberg (DE); BLAWAT, Meinolf, 30659 Hannover (DE); LI, Hui, 30419 Hannover (DE); PETERS, Hartmut, 30890 Barsinghausen (DE)
(74) Representative: Huchet, Anne
(86) International application number: PCT/EP2003/002682
(87) International publication number: WO 2003/081459

(56) References cited:
- WO-A-01/75884
- WO-A1-00/52928
- WO-A2-01/37135
- DE JONG, A: "Metadaten in der audiovisuellen Produktionsumgebung" FERNSEH UND KINO-TECHNIK, vol. 55, no. 8-9, August 2001 (2001-08) - September 2001 (2001-09), pages 485-495, XP001065840 BERLIN, DE
- PRZYBYLA, H: "i_Broadcast--"Crossmediales" Content Management" FERNSEH UND KINO-TECHNIK, vol. 55, no. 8-9, August 2001 (2001-08) - September 2001 (2001-09), pages 527-533, XP001065846 BERLIN,DE
- CECCARELLI M ET AL: "Home multimedia systems: on personal video libraries" MULTIMEDIA COMPUTING AND SYSTEMS, 1999. IEEE INTERNATIONAL CONFERENCE ON FLORENCE, ITALY 7-11 JUNE 1999, LOS ALAMITOS, CA, USA,IEEE COMPUT. SOC, US, 7 June 1999 (1999-06-07), pages 1082-1085, XP010519568 ISBN: 0-7695-0253-9
- "1ST-1999-11702: myTV - personalised services for digital television; Final Report, Date March-02, pages 1-23" XP002220956 Retrieved from the Internet: <URL: http://www.extra.research.philips.com/eupr ojects/mytv/myTV%20Final%20 project%20o> [retrieved on 2002-11-11] the whole document
- PFEIFFER S ET AL: "TV ANYTIME AS AN APPLICATION SCENARIO FOR MPEG-7" PROCEEDINGS ACM MULTIMEDIA 2000 WORKSHOPS. MARINA DEL REY, CA, NOV. 4, 2000, ACM INTERNATIONAL MULTIMEDIA CONFERENCE, NEW YORK, NY: ACM, US, vol. CONF. 8, 4 November 2000 (2000-11-04), pages 89-92, XP001003701 ISBN: 1-58113-311-1
- "Specification Series: S-3, On: Metadata (Normative), Document: SP003v1.1" 17 August 2001 (2001-08-17) , THE TV-ANYTIME FORUM , PAGES 1-66, <WWW.TV-ANYTIME.ORG> XP002205700 cited in the application the whole document
- "MPEG-7 APPLICATIONS DOCUMENT V.10" ISO/IEC JTC1/SC29/WG11/ N3934, XX, XX, January 2001 (2001-01), pages 1-41, XP000989427
- HOFFMANN H: "INTERFACES, PROTOKOLLE UND METADATEN IN ZUKUENFTIGEN FERNSEHSTUDIOS" RUNDFUNKTECHNISCHE MITTEILUNGEN, MENSING. NORDERSTEDT, DE, vol. 43, no. 1, March 1999 (1999-03), pages 18-28, XP000824064 ISSN: 0035-9890

## Description

The invention relates to a method and to an apparatus for using metadata from different sources, especially for organizing of recordings, searching for content and accessing specific recordings.

### Background

The capacity of digital storage media for personal video recording grows continuously. Currently it is possible to store about 20 full-length movies on a single 100 gigabyte (GB) hard disk. In 2005, it will likely be possible to store about 80 movies on a single 400 GB hard disk.

Similarly, the capacity of exchangable storage media is expanding. DVDs containing full-length movies are widely available and also rewritable DVDs (DVD-RAM, DVD-RW, DVD+RW) are on the market, having a storage capacity of 4.7 GB. Furthermore, the basic specification for a next generation of large capacity optical discs called "Blu-ray Disc" has recently been established, enabling the recording, rewriting and playback of up to 27 GB of data on a single sided single layer disc. In order to further increase the capacity, two or more layers may be used per side and these may be applied to both sides of the disc. Finally, several discs may be combined in a special magazine.

This enormous amount of data requires new ways to organize the recordings, search for content and access specific recordings. One possible solution for this is to use so-called metadata, defined as data about data, for the recorded content. Various industry groups and standard bodies have been developing metadata standards for different purposes and ap-applications. In the context of metadata usage, the content to which metadata are related is often called "essence".

The compression standards for AV streams MPEG-1, MPEG-2 and MPEG-4 already contain some program specific information (PSI), specified in the respective MPEG systems standard. Similarly, the DVB standard used for the transmission of digital television signals specifies Service Information (DVB-SI) included in a DVB compliant MPEG-2 transport stream multiplex.

More recently, the TV-Anytime Forum defined in the specification S-3 on Metadata, document number SP003v1.1 metadata which allow the consumer to find, navigate and manage content from a variety of internal and external sources including, for example, enhanced broadcast, interactive TV, Internet and local storage. Additionally, these metadata may also include information about user preferences, such as favorite actors or TV shows, which facilitate automatic filtering and acquisition of content by agents on behalf of the consumer.

Similarly, an MPEG standard for the effective and efficient access to multimedia content is currently under development [ISO/IEC 15938: Information Technology -- Multimedia content description interface]. This MPEG-7 standard will offer metadata elements and their structure and relationships, that are defined in the form of Descriptors and Description Schemes to create descriptions of the multimedia content.

WO 00/52928 describes a method for eliminating listings in an electronic program guide. The method provides merged electronic program guides with redundant listings removed. Duplicate television station listings may be eliminated based on a priority associated with the various signal sources, or based on the signal quality of the various sources.

### Invention

The present disclosure provides a method for deriving unified metadata according to claim 1 and an apparatus for deriving unified metadata according to claim 8.

The invention is based on the recognition of the following fact. Often several different metadata describing the same content may be available. However, these metadata may have different associated meanings (semantics) and ways of coding (syntax), which are defined in the respective standards, e.g. the MPEG-7 or TV-Anytime standard. On the other hand, in systems planning to employ metadata, certain semantics and syntax of metadata or metadata fields will be more appropriate than others, depending on the properties and features the system shall be able to perform. Therefore, it is desirable to allow the use of all available metadata, despite their different semantics and syntax.

Therefore, a problem to be solved by the invention is to allow the use of metadata originating from different sources having different semantics or syntax.

This problem is solved by the method disclosed in claim 1. An apparatus that utilizes this method is disclosed in claim 8.

According to the invention original metadata are received from different sources and unified metadata are derived from said original metadata using one or more transformation rules, wherein the transformation rules specify how the content or parts of the content of said original metadata shall be used to constitute the content or part of the content of said unified metadata.

Advantageously, the derived unified metadata are presented to a user and are processed in response to a user input.

Advantageously, the processing results in selecting, deleting or modifying said unified metadata.

Furthermore, it is of advantage to store the original metadata, keep the stored original metadata unchanged and enable to recurr from the unified metadata to the original metadata.

For the transformation rules, it is advantageous to base them on formal and/or structural properties of the original metadata in all cases where the original metadata are themself structured.

For unstructured original metadata of textual nature, it is advantageous to base the transformation rules on a similarity measure which allows for a tolerant matching of phrases against a user-defined search phrase.

According to a further advantageous embodiment a part of the transformation rules covers the mapping or inheritance of the essence links from within the original metadata into all derived unified metadata.

Further advantageous embodiments of the invention result from the following description.

### Drawing

Exemplary embodiments of the invention are described with reference to the accompanying drawings, which show in:
- Fig. 1: generically the conversion of original metadata records with different syntax and semantics into unified metadata records;
- Fig.2.: a block diagram of the processing of metadata including the derivation of unified metadata from received original metadata.

### Exemplary embodiments

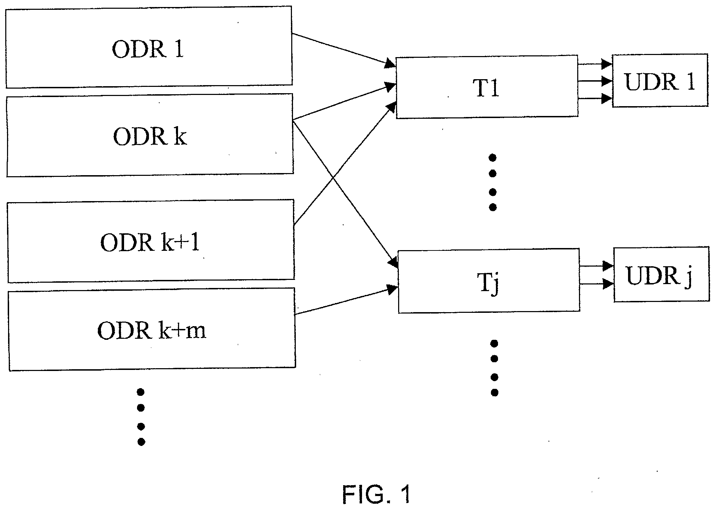

Figure 1 shows generically the conversion of original metadata records with different syntax and semantics into unified metadata records, in the following also called Core Metadata. Transformations T1,..., Tj,... specify rules how the content or parts of the content of the original metadata records of a predetermined class shall be used to constitute the content or part of the content of a unified metadata record. In Figure 1, the blocks "ODR1" to "ODRk+m" symbolize different classes of original metadata record, and more specifically, it shall be assumed that blocks ODR1 and ODRk both are governed by one specific syntax/semantics, whereas blocks ODRk+1 and ODRk+m are governed by a second, different syntax/semantics. All original metadata records of class ODR1 are converted by a set of transformations T1 into instances of a first class of unified metadata records UDR1. As part of this conversion, the transformation T1 may mandate the presence of certain parts within the instance of ODR1, so that by applying T1, not all instances of ODR1 will actually generate an output UDR1. Also, it must be kept in mind, that the conversion described by T1 may mandate that only certain parts of the instance of ODR1 shall be taken to constitute certain parts of the emerging instance of UDR1. Similarly, the same set of transformations T1 may contain a rule which defines that, under certain conditions, some predefined parts of instances of a second class of original metadata records ODRk are converted into other instances of the first kind of unified metadata records UDR1. However, other instances of the second class of original metadata ODRk, if they contain certain other parts, are converted by a different set of transformations Tj into instances of a second class of unified metadata records UDRj. Similarly, further original metadata records of classes ODRk+1 and ODRk+m having a syntax/semantics according to a second standard are converted by the transformations T1 and Tj into instances of the first and second unified metadata records UDR1 and UDRj. In this way, when a sufficient number of original metadata is available and the respective transformation rules are applied, several candidates will be generated for each kind of Core Metadata. In this way, a user has sufficient material from which he can editorially distill the Core Metadata he finally wants.

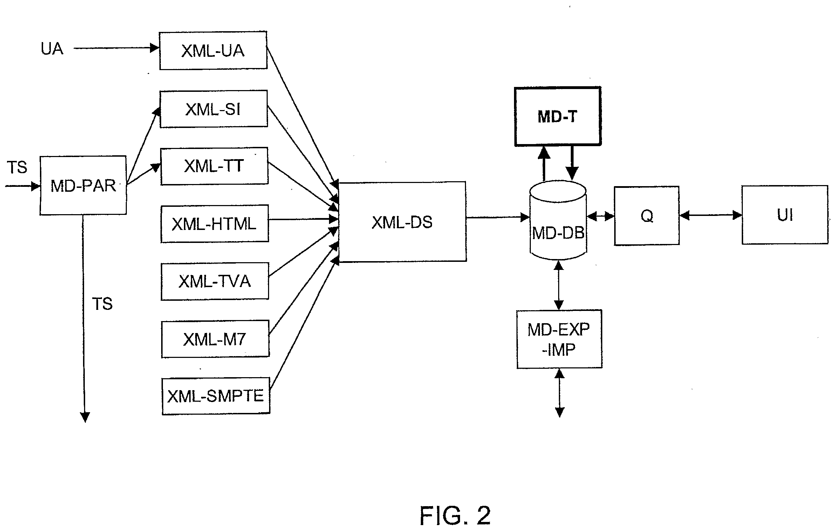

Figure 2 shows an example for the derivation of Core Metadata from originally received metadata as part of an overall metadata processing chain. Although the further description concentrates on the processing of an MPEG-2 transport stream, it can easily be generalised for use in any system using multiplexed bitstreams comprising metadata.

When recording a broadcast DVB transport stream TS additional service information encompassed in the multiplex besides the audio and video signals is parsed from the multiplex. For this purpose the broadcast signal is analyzed for metadata like teletext, DVB-SI etc. by a DVB metadata parser MD-PAR and the detected metadata are demultiplexed and extracted.

The extracted metadata are transformed into XML metadata descriptors XML-DS. This XML representation for the metadata descriptors allows to have a generic framework for different kinds of metadata descriptors. In other words, the metadata database MD-DB can store any kind of metadata as long as there is a transformer that converts it from its native representation into the XML representation. Similarly it is possible to perform queries on the metadata, independent of their respective metadata sources.

There are different transformers for different metadata sources, like e.g. a transformer XML-SI for the transformation of DVB-SI data or a further transformer XML-TT for the transformation of Teletext or Closed Caption data. The transformers transform the metadata from their native coding, e.g. DVB-SI binary format, into an XML representation. This transformation is keeping the information inside the metadata "as is". It neither adds nor removes information. This allows a very flexible later use of the metadata. During recording the metadata descriptors are accumulated and stored into the metadata database MD-DB.

Similarly, metadata descriptors generated manually by the user such as user-annotations UA may be stored after they have been transformed by a transformer XML-UA into XML representation. Furthermore, metadata descriptors according to other standards like HTML, TV-Anytime, MPEG-7 or SMPTE are transformed by respective transformers XML-HTML, XML-TVA, XML-M7 or XML-SMPTE and stored. These metadata descriptors may be received via the same or other transmission paths like the Internet.

An archive system may also store metadata descriptors originating from other recording devices and/or storage media. However, this necessitates an export and import facility MD-EXP-IMP for metadata descriptors, such that metadata descriptors can be exchanged between devices and/or media.

In order to use the metadata descriptors stored in the metadata database MD-DB the inventive conversion of the original metadata into Core Metadata CM has to be performed using specific transformation rules MD-T. Here is where it becomes beneficial that the metadata is stored "as is". No information has been added or removed from the complete set of metadata information that is available.

Finally, access may be provided to all metadata via a user interface UI with query and browsing techniques Q for finding the corresponding video/audio stream or metadata the selected metadata descriptor is pointing to.

One example of the conversion of the original metadata into Core Metadata is the conversion of different metadata items into title information for a given recording. Often the title information is the most useful and versatile single metadata item when it comes to archiving, searching and sorting of any kind of AV material. For all material, be it self recorded (e.g. with a camcorder), or recorded from broadcast, or be it on canned media, mostly everybody will be able to associate a *Title* with it, under which the material can, on one hand, be recognized for later search, but, on the other hand, can also be sufficiently differentiated, if necessary, against other material which might be closely similar.

Corresponding to this very intuitive notion of *Title,* many existing metadata systems comprise items which constitute a container for Titles, although they may come under different names and have distinct syntaxes.
- DVB, in its "DVB-SI" system of Service Information, defines a "short event descriptor" which "*provides the name of the event and a short description of the event in text form*". The syntax of the short event descriptor foresees two variable length text fields: a dedicated one for the "*event_name*", and another one to *"specify the text description of the event".*
- MPEG-7, in its "*Creation Description Scheme*", has the notion of "Title", as "*the name of an audio-visual program".*
- TVAnytime, in its work on Electronic Program Guides, mentions the concepts of "Title" as "*Textual title of the program (...) Multiple title descriptors may be included*". Similar concepts of *"Episode Title*" and *"Series Title"* exist.
- Any container for any kind of User Annotations might always happen to be used for a user-specific *Title* of a piece of AV material.

Correspondingly, a Core Metadata scheme according to the present invention, will have one class of Core Metadata named "*Title*", and all the above mentioned given metdata should be used as input to derive "*Title*" candidates, because - depending on what they contain - they might contain good material to be used for the above mentioned intuitive notion of "*Title*". Hence, the Core Metadata scheme will define transformation rules for each of the metadata above, specifying in each case which part of the content should be inserted as the content of the derived Core Metadata item. The Core metadata scheme may then provide tools such that the user can inspect all the "Title" candidates, select one of them and/or edit their content as to match his/her personal preference.

An even more illustrate example for the derivation of "Title" candidates could be as follows. EPG data are transmitted according to the TV-Anytime standard and are received by a TV receiver or set top box. A user invokes a display of the EPG on a television screen and selects a television program in the displayed EPG based on the displayed title. The title information according to the TV-Anytime standard is separated and stored as a first candidate of the Core MD "title". After tuning the TV receiver to the selected channel, the SI-information within the DVB signal is analyzed and a second title information is separated and stored as a second candidate. Furthermore, the teletext signal received on the received channel is checked for information about the current program, which is stored as third title candidate. Since the stored title information is based on different standards, different transformations are applied to the title informations in order to convert them all into the same format. All converted title informations are stored, and at any convenient later time, they can be displayed to the user and the user then can select the "best" title information. For example, for a long title two of the three title informations may happen to be abbreviated versions while only the third one may happen to be complete. The user may in this case select the complete title information for future overviews of his recordings.

Metadata being defined as "data about data", a constituent part of any original metadata will always be an essence link, by which the metadata points to an AV essence. From this it is obvious, that parts of the transformation rules MD-T will advantageously describe the details how the essence links found on an input metadata shall be duplicated in order to appear on the derived Core Metadata, too. In addition to essence links, an original metadata may also contain "origin links" specifying where the original metadata was received or extracted from. Assuming that Core Metadata, too, may have such an "origin link", another part of the transformation rule MD-T may describe how this Core Metadata origin link shall be set, one possible solution being that this link points to the original metadata from which the core metadata was generated.

For original metadata which are themself structured, like those according to the DVB-SI or TV-Anytime standard, the transformation rules MD-T will typically select only certain kinds of metadata for further processing, will test for the presence of certain optional structural parts of the input metadata, will potentially check some parts whether they have prescribed values, and, conditional on these preconditions being met, the transformation will extract a certain subset of the input metadata and embed it in a certain position of the output Core Metadata to be generated.

For other input metadata, especially those which are unstructured except being indicated as "textual", a transformation rule MD-T may typically consist in evaluating a phrase similarity measure between the input metadata and some user-provided search phrase. Such a phrase similarity measure should advantageously be made tolerant against slight variations of grammar or wording, which can be achieved by evaluating word order and word distance, and by additionally converting all words to be compared into word stems using algorithms known in the art as "stemming".

The invention is especially useful for personal video recording, e.g. for the search and access of specific recordings on high-volume storage media. However, the invention is also applicable to all other kinds of electronic multimedia content referencing and content location. The recorded content may be movies and television programs but also every other form of audiovisual information, such as arbitrary combinations of still pictures, graphics, 3D models, audio, speech and video.

## Claims

1. Method for deriving unified metadata, said method comprising
- receiving original metadata from different sources, said original metadata having different associated names and/or syntaxes;
- recording said received original metadata on a storage medium;
- deriving unified metadata from said received original metadata using one or more transformation rules, said transformation rules specifying how the content or parts of the content of said original metadata shall be used to constitute the content or part of the content of said unified metadata;
- storing said derived unified metadata; and
- displaying said stored unified metadata
wherein
- said original metadata and said unified metadata are pointing to and describing same metadata items of same audio and/or video content, and
- deriving said unified metadata comprises generating several candidates for the unified metadata and then selecting one candidate from the several candidates as the unified metadata.

2. Method according to claim 1, wherein the selecting is performed in response to a user input.

3. Method according to claim 1 or 2, comprising:
- storing the original metadata;
- keeping the stored original metadata unchanged; and
- enabling to recur from the unified metadata to the original metadata.

4. Method according to any of claims 1 to 3, wherein said original metadata contain links, and where a part of said transformation rules covers the mapping or inheritance of said links from within said original metadata into said unified metadata.

5. Method according to any of claims 1 to 4, wherein said original metadata are at least partly structured and said transformation rules are at least partly based on examining and evaluating the structure of said original metadata.

6. Method according to any of claims 1 to 4, wherein said original metadata at least partly consist of sequences of words not otherwise structured.

7. Method according to claim 6, wherein said transformation at least partly involves a search phrase and said transformation rules are at least partly based on evaluating a phrase similarity measure, said phrase similarity measure being based on word order and/or word distance measures, and wherein, prior to applying said phrase similarity measure, the words of said original metadata and of said search phrase are optionally normalized by applying a stemming algorithm.

8. Apparatus for deriving unified metadata, comprising
- means for receiving original metadata from different sources, said original metadata having different associated names and/or syntaxes;
- means for recording said original metadata on a storage medium;
- means for deriving unified metadata from said received original metadata using one or more transformation rules, said transformation rules specifying how the content or parts of the content of said original metadata shall be used to constitute the content or part of the content of said unified metadata;
- means for storing said derived unified metadata; and
- means for displaying said stored unified metadata
wherein
- said original metadata and said unified metadata are pointing to and describing same metadata items of same audio and/or video content, and
- said means for deriving said unified metadata are adapted for generating several candidates for the unified metadata and then for selecting one candidate from the several candidates as unified metadata.

9. Apparatus according to claim 8, wherein the means for deriving the unified metadata are configured to select the one candidate as unified metadata in response to a user input.

10. Apparatus according to claim 8 or 9, comprising:
- means for storing the original metadata;
- means for keeping the stored original metadata unchanged; and
- means for enabling to recur from the unified metadata to the original metadata.

## Patentansprüche

1. Verfahren zum Ableiten vereinheitlichter Metadaten, wobei das Verfahren umfasst:
- Empfangen ursprünglicher Metadaten aus unterschiedlichen Quellen, wobei den ursprünglichen Metadaten unterschiedliche Namen und/oder Syntaxen zugeordnet sind;
- Aufzeichnen der empfangenen ursprünglichen Metadaten in einem Speichermedium;
- Ableiten vereinheitlichter Metadaten aus den empfangenen ursprünglichen Metadaten unter Verwendung einer oder mehrerer Transformationsregeln, wobei die Transformationsregeln spezifizieren, wie der Inhalt oder Teile des Inhalts der ursprünglichen Metadaten zu verwenden sind, um den Inhalt oder einen Teil des Inhalts der vereinheitlichten Metadaten zu bilden;
- Speichern der abgeleiteten vereinheitlichten Metadaten; und
- Anzeigen der gespeicherten vereinheitlichten Metadaten,
wobei
- die ursprünglichen Metadaten und die vereinheitlichten Metadaten auf dieselben Metadatenobjekte mit demselben Audio- und/oder Videoinhalt weisen und sie beschreiben, und
- das Ableiten der vereinheitlichten Metadaten das Erzeugen mehrerer Kandidaten für die vereinheitlichten Metadaten und daraufhin das Auswählen eines Kandidaten aus den mehreren Kandidaten als die vereinheitlichten Metadaten umfasst.

2. Verfahren nach Anspruch 1, wobei das Auswählen in Reaktion auf eine Nutzereingabe ausgeführt wird.

3. Verfahren nach Anspruch 1 oder 2, wobei das Verfahren umfasst:
- Speichern der ursprünglichen Metadaten;
- die gespeicherten ursprünglichen Metadaten werden ungeändert gelassen; und
- Ermöglichen der Wiederkehr von den vereinheitlichten Metadaten zu den ursprünglichen Metadaten.

4. Verfahren nach einem der Ansprüche 1 bis 3, wobei die ursprünglichen Metadaten Verknüpfungen enthalten und wobei ein Teil der Transformationsregeln die Abbildung oder Vererbung der Verknüpfungen von den ursprünglichen Metadaten auf die vereinheitlichten Metadaten umfassen.

5. Verfahren nach einem der Ansprüche 1 bis 4, wobei die ursprünglichen Metadaten mindestens teilweise strukturiert sind und wobei die Transformationsregeln mindestens teilweise auf einer Prüfung und Bewertung der Struktur der ursprünglichen Metadaten beruhen.

6. Verfahren nach einem der Ansprüche 1 bis 4, wobei die ursprünglichen Metadaten mindestens teilweise aus Folgen sonst nicht strukturierter Wörter bestehen.

7. Verfahren nach Anspruch 6, wobei die Transformation mindestens teilweise einen Suchbegriff umfasst und wobei die Transformationsregeln mindestens teilweise auf dem Bewerten eines Begriffsähnlichkeitsmaßes beruhen, wobei das Begriffsähnlichkeitsmaß auf Wortreihenfolgen- und/oder auf Wortentfernungsmaßen beruht und wobei die Wörter der ursprünglichen Metadaten und des Suchbegriffs optional durch Anwenden eines Stammrückführungsalgorithmus normiert werden, bevor das Begriffsähnlichkeitsmaß angewendet wird.

8. Vorrichtung zum Ableiten vereinheitlichter Metadaten, wobei die Vorrichtung umfasst:
- Mittel zum Empfangen ursprünglicher Metadaten aus unterschiedlichen Quellen, wobei den ursprünglichen Metadaten unterschiedliche Namen und/oder Syntaxen zugeordnet sind;
- Mittel zum Aufzeichnen der ursprünglichen Metadaten in einem Speichermedium;
- Mittel zum Ableiten vereinheitlichter Metadaten aus den empfangenen ursprünglichen Metadaten unter Verwendung einer oder mehrerer Transformationsregeln, wobei die Transformationsregeln spezifizieren, wie der Inhalt oder Teile des Inhalts der ursprünglichen Metadaten zu verwenden sind, um den Inhalt oder einen Teil des Inhalts der vereinheitlichten Metadaten zu bilden;
- Mittel zum Speichern der abgeleiteten vereinheitlichten Metadaten; und
- Mittel zum Anzeigen der gespeicherten vereinheitlichten Metadaten,
wobei
- die ursprünglichen Metadaten und die vereinheitlichten Metadaten auf dieselben Metadatenobjekte mit demselben Audio- und/oder Videoinhalt weisen und sie beschreiben, und
- die Mittel zum Ableiten der vereinheitlichten Metadaten dafür ausgelegt sind, mehrere Kandidaten für die vereinheitlichten Metadaten zu erzeugen und daraufhin aus den mehreren Kandidaten einen Kandidaten als die vereinheitlichten Metadaten auszuwählen.

9. Vorrichtung nach Anspruch 8, wobei die Mittel zum Ableiten der vereinheitlichten Metadaten dafür konfiguriert sind, in Reaktion auf eine Nutzereingabe den einen Kandidaten als vereinheitlichte Metadaten auszuwählen.

10. Vorrichtung nach Anspruch 8 oder 9, die umfasst:
- Mittel, um die ursprünglichen Metadaten zu speichern;
- Mittel, um die gespeicherten ursprünglichen Metadaten ungeändert zu lassen; und
- Mittel, um die Wiederkehr von den vereinheitlichten Metadaten zu den ursprünglichen Metadaten zu ermöglichen.

## Revendications

1. Procédé pour dériver des métadonnées unifiées, ledit procédé comprenant
- la réception de métadonnées originales provenant de différentes sources, lesdites métadonnées originales ayant différents noms et/ou syntaxes associés ;
- l'enregistrement desdites métadonnées originales reçues sur un support de stockage ;
- la dérivation de métadonnées unifiées desdites métadonnées originales reçues à l'aide d'une ou de plusieurs règles de transformation, lesdites règles de transformation spécifiant comment utiliser le contenu ou des parties du contenu desdites métadonnées originales pour constituer le contenu ou une partie du contenu desdites métadonnées unifiées ;
- le stockage desdites métadonnées unifiées dérivées ; et
- l'affichage desdites métadonnées unifiées stockées
dans lequel
- lesdites métadonnées originales et lesdites métadonnées unifiées pointent vers et décrivent les mêmes éléments de métadonnées du même contenu audio et/ou vidéo, et
- la dérivation desdites métadonnées unifiées comprend la génération de plusieurs candidats pour les métadonnées unifiées, puis la sélection d'un candidat parmi les plusieurs candidats comme métadonnées unifiées.

2. Procédé selon la revendication 1, dans lequel la sélection est effectuée en réponse à une entrée utilisateur.

3. Procédé selon la revendication 1 ou 2, comprenant :
- le stockage des métadonnées originales ;
- la conservation des métadonnées originales stockées inchangées ; et
- la possibilité de revenir aux métadonnées originales à partir des métadonnées unifiées.

4. Procédé selon l'une des revendications 1 à 3, dans lequel lesdites métadonnées originales contiennent des liens et dans lequel une partie desdites règles de transformation couvre le mappage ou l'héritage desdits liens desdites métadonnées originales auxdites métadonnées unifiées.

5. Procédé selon l'une des revendications 1 à 4, dans lequel lesdites métadonnées originales sont au moins en partie structurées et lesdites règles de transformation sont au moins en partie basées sur l'examen et l'évaluation de la structure desdites métadonnées originales.

6. Procédé selon l'une des revendications 1 à 4, dans lequel lesdites métadonnées originales sont au moins en partie composées de séquences de mots qui ne sont pas structurées autrement.

7. Procédé selon la revendication 6, dans lequel ladite transformation implique au moins en partie une phrase de recherche et lesdites règles de transformation sont au moins en partie basées sur l'évaluation d'une mesure de similarité entre phrases, ladite mesure de similarité entre phrases étant basée sur des mesures d'ordre des mots et/ou de distance entre mots, et dans lequel, avant l'application de ladite mesure de similarité entre phrases, les mots desdites métadonnées originales et de ladite phrase de recherche sont éventuellement normalisés par l'application d'un algorithme de désuffixation.

8. Appareil pour dériver des métadonnées unifiées, comprenant
- un moyen pour recevoir des métadonnées originales provenant de différentes sources, lesdites métadonnées originales ayant différents noms et/ou syntaxes associés ;
- un moyen pour enregistrer lesdites métadonnées originales sur un support de stockage ;
- un moyen pour dériver des métadonnées unifiées desdites métadonnées originales reçues à l'aide d'une ou de plusieurs règles de transformation, lesdites règles de transformation spécifiant comment utiliser le contenu ou des parties du contenu desdites métadonnées originales pour constituer le contenu ou une partie du contenu desdites métadonnées unifiées ;
- un moyen pour stocker lesdites métadonnées unifiées dérivées ; et
- un moyen pour afficher lesdites métadonnées unifiées stockées
dans lequel
- lesdites métadonnées originales et lesdites métadonnées unifiées pointent vers et décrivent les mêmes éléments de métadonnées du même contenu audio et/ou vidéo, et
- ledit moyen pour dériver lesdites métadonnées unifiées est adapté pour générer plusieurs candidats pour les métadonnées unifiées, puis pour sélectionner un candidat parmi les plusieurs candidats comme métadonnées unifiées.

9. Appareil selon la revendication 8, dans lequel le moyen pour dériver les métadonnées unifiées est configuré pour sélectionner le candidat pour les métadonnées unifiées en réponse à une entrée utilisateur.

10. Appareil selon la revendication 8 ou 9, comprenant :
- un moyen pour stocker les métadonnées originales ;
- un moyen pour conserver les métadonnées originales stockées inchangées ; et
- un moyen pour revenir aux métadonnées originales à partir des métadonnées unifiées.
